# EUROPÄISCHE PATENTSCHRIFT

(11) **EP 3 500 600 B1**
(45) Veröffentlichungstag und Bekanntmachung des Hinweises auf die Patenterteilung: **13.10.2021**
(21) Anmeldenummer: 17752377.6
(22) Anmeldetag: 14.08.2017
(51) Int. Cl.: C08C 19/25, C08C 19/44, C08L 9/06, C08L 15/00

(54) **SCHWEFELVERNETZBARE KAUTSCHUKMISCHUNG UND FAHRZEUGREIFEN**
SULFUR-CROSSLINKABLE RUBBER MIXTURE AND VEHICLE TIRE
MÉLANGE DE CAOUTCHOUC RÉTICULABLE AU SOUFRE ET PNEUMATIQUE DE VÉHICULE

(30) Priorität: 17.08.2016 DE 102016215353
(43) Veröffentlichungstag der Anmeldung: 26.06.2019
(73) Patentinhaber: Continental Reifen Deutschland GmbH, 30165 Hannover (DE)
(72) Erfinder: RECKER, Carla, 30167 Hannover (DE); SÁ, Catarina, 30916 Isernhagen (DE); WEHMING-BOMKAMP, Kathrin, 30161 Hannover (DE); PAVON SIERRA, Viktoria, 30419 Hannover (DE); MÜLLER, Norbert, 29336 Nienhagen (DE); RADKE, Michael, 30165 Hannover (DE)
(74) Vertreter: Continental Corporation
(86) Internationale Anmeldenummer: PCT/EP2017/070544
(87) Internationale Veröffentlichungsnummer: WO 2018/033500

(56) Entgegenhaltungen:
- SATO M ET AL: "Rubber composition for forming pneumatic tire e.g. winter tire, comprises diene-based rubber having preset weight average molecular weight, low molecular weight butadiene rubber having preset weight average molecular weight, and silica", WPI / 2017 CLARIVATE ANALYTICS,, Bd. 2015, Nr. 1, 11. Dezember 2014 (2014-12-11), XP002773893,
- KUSHIDA N ET AL: "Rubber composition used in manufacture of pneumatic tire, comprises specified amount of silica, aromatic modified terpene resin, styrene-butadiene copolymer, and diene-based rubber having preset weight average molecular weight", WPI / 2017 CLARIVATE ANALYTICS,, Bd. 2014, Nr. 82, 11. Dezember 2014 (2014-12-11), XP002773894,
- DATABASE WPI Week 201482 Thomson Scientific, London, GB; AN 2014-V97521 XP002774437, & JP 2014 231550 A (YOKOHAMA RUBBER CO LTD) 11. Dezember 2014 (2014-12-11)
- DATABASE WPI Week 200975 Thomson Scientific, London, GB; AN 2009-Q76586 XP002774438, & JP 2009 256532 A (BRIDGESTONE CORP) 5. November 2009 (2009-11-05)

## Beschreibung

Die Erfindung betrifft eine schwefelvernetzbare Kautschukmischung, enthaltend einen Kautschukblend, und einen Fahrzeugreifen enthaltend eine solche Kautschukmischung.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1052270 A sind z. B. Laufstreifenmischungen auf Basis von Ruß als Füllstoff bekannt, die für einen guten Griff auf Eis unter anderem ein flüssiges Polymer, z. B. Polybutadien, enthalten.

Aus der DE 3804908 A1 sind ebenfalls Laufstreifenmischungen auf Basis von Ruß als Füllstoff bekannt, die für gute Wintereigenschaften flüssiges Polybutadien enthalten. Flüssiges Polybutadien mit hohem Vinylgehalt und einer hohen Glasübergangstemperatur (T_{g}) wird in der EP 1035164 A für Reifenlaufstreifen als Ersatz für herkömmliche Weichmacheröle vorgeschlagen.

Auch aus der WO 2012/084360 A1 ist eine Kautschukmischung mit verbessertem Rollwiderstand bekannt, die einen flüssigen Butadienkautschuk neben einem festen Styrolbutadienkautschuk enthält.

In der EP 2 778 184 A1 wird ein Polymergemisch aus einem hochmolekularen SSBR und einem niedrigmolekularen SSBR erzeugt, wobei die SSBR auch funktionalisiert sein können. Dieses Polymergemisch wird in Kautschukmischungen für Reifen eingesetzt.

Die DE 102008058996 A1 und die DE102008058991 A1 offenbaren als Ersatz für übliche Weichmacheröle endständig amin-modifizierte flüssige Polybutadiene bzw. carboxylendständig modifizierte flüssige Polybutadiene in Laufstreifenmischungen mit einer hohen Menge an unfunktionalisiertem Synthesekautschuk. Die Reifen sollen sich durch eine sehr gute Ausgewogenheit zwischen niedrigem Kraftstoffverbrauch und guten Hafteigenschaften und die Fähigkeit zur Unterdrückung der Rissbildung am Boden von Profilrillen unter gleichzeitiger Wahrung der Verschleiß festigkeit auszeichnen.

Die EP 2060604 B1 offenbart eine Kautschukmischung enthaltend ein funktionalisiertes Polymer mit einem M_{w} von 20000 g/mol sowie Ruß als Füllstoff in Kombination mit 60 phr Naturkautschuk.

In der US 20020082333 A1 wird zur Verbesserung der Prozessierbarkeit ein mit Triethoxysilan modifiziertes Polybutadien anstelle eines Silans in einer NR-freien Kautschukmischung auf Basis von unfunktionalisiertem Synthesekautschuk und Kieselsäure als Füllstoff eingesetzt.

Die JP 2014-231575 A und die JP 2014-231550 beschreiben Kautschukmischungen für Fahrzeugluftreifen, die funktionalisierten SBR und nicht-funktionalisiertes, niedermolekulares Polybutadien, Kieselsäure und TESPT als Silankupplungsagens enthalten.

In der EP 1 535 948 B1 wird ein Styrol-Butadien-Kautschuk offenbart, der als Funktionalisierung Polyorganosiloxan-Gruppen enthaltend Epoxy-Gruppen trägt, wobei drei oder mehr Polymerketten an eine Polyorganosiloxan-Gruppe geknüpft sind. Bei der Kombination dieses Polymers mit einem unfunktionalisierten Butadienkautschuk in einer kieselsäurehaltigen Kautschukmischung sollen sich verbesserte Rollwiderstands-, Abrieb- und Nassgriffeigenschaften ergeben.

Aus der EP 2 853 558 A1 ist es bekannt, zur Verbesserung des Rollwiderstandes und des Abriebverhaltens in einer Kautschukmischung für Fahrzeugreifen einen Styrol-Butadien-Kautschuk einzusetzen, der mit Phthalocyanin-Gruppen und/oder Hydroxy-Gruppen und/oder Epoxy-Gruppen und/oder Silan-Sulfid-Gruppen funktionalisiert ist und dessen Styrol-Gehalt 0 bis 12 Gew.-% beträgt und der im unvulkanisierten Zustand eine Glasübergangstemperatur (T_{g}) gemäß DSC von -75 bis -120 °C aufweist.

Die EP 1 925 363 B1 offenbart eine Kautschukzusammensetzung für Reifen, die ein modifiziertes (funktionalisiertes) SBR mit einem niedrigen Molekulargewicht in Kombination mit einem hochmolekularen, modifizierten Dienkautschuk enthält. Dadurch soll u. a. der Rollwiderstand verbessert werden.

Der Erfindung liegt nun die Aufgabe zu Grunde, eine Kautschukmischung bereitzustellen, die sich gut verarbeiten lässt. Ferner liegt der Erfindung die Aufgabe zu Grunde, eine Kautschukmischung mit einem Kautschukblend zur Verfügung zu stellen, die bei den daraus resultierenden Reifen zu verbesserten Wintereigenschaften und/oder Abriebeigenschaften und/oder Rollwiderstandseigenschaften führt, ohne dass dabei die Nassgriffeigenschaften beeinträchtigt werden.

Gelöst wird diese Aufgabe durch eine schwefelvernetzbare Kautschukmischung, enthaltend
- einen Kautschukblend aus
- zumindest einem hochmolekularen, lösungspolymerisierten Dienpolymer A aus zumindest einem konjugierten Dien und gegebenenfalls einer oder mehrerer vinylaromatischer Verbindungen mit einem Gehalt an vinylaromatischer Verbindung von 0 bis 50 Gew.-%, einem Vinylanteil von 8 bis 80 Gew.-% bezogen auf den Dienanteil, einer Glasübergangstemperatur T_{g} gemäß DSC von -100 °C < T_{g} < +20 °C, einem Molekulargewicht M_{w} gemäß GPC von mehr als 350000 g/mol und mit einer Polydispersität PD von 1,1 < PD < 3 und
- zumindest einem niedermolekularen, lösungspolymerisierten Polymer B aus zumindest einem konjugierten Dien oder zumindest einem konjugierten Dien und einer oder mehrerer vinylaromatischen Verbindungen oder zumindest einer oder mehrerer vinylaromatischen Verbindungen mit einem Gehalt an vinylaromatischer Verbindung von 0 bis 50 Gew.-%, einem Vinylanteil von 8 bis 80 Gew.-% bezogen auf den ggf. vorhandenen Dienanteil, einer Glasübergangstemperatur T_{g} gemäß DSC von -100 °C < T_{g} < +80 °C, einem Molekulargewicht M_{w}gemäß GPC von 1300 g/mol < M_{w} < 10000 g/mol und mit einer Polydispersität PD von 1 < PD < 1,5, wobei zumindest eines der Polymere A oder B am Kettenende und/oder entlang der Polymerkette und/oder in einem Kopplungszentrum (an einem Funktionalisierungszentrum können mehrere Polymere sitzen) mit zumindest einer Gruppe ausgewählt aus Epoxygruppen, Hydroxygruppen, Carboxygruppen, Silan-Sulfidgruppen, Aminogruppen, Siloxangruppen, Organosiliciumgruppen, Phthalocyaningruppen und Aminogruppen enthaltenden Alkoxysilylgruppen funktionalisiert ist
- 30 bis 300 phr zumindest einer Kieselsäure und
- 1 bis 20 phf zumindest eines geblockten und/oder ungeblockten Mercaptosilans als Silankupplungsagens.

Überraschenderweise wurde gefunden, dass die vorgenannte Kautschukmischung mit dem speziellen Kautschukblend aus dem speziellen Dienpolymer A und dem speziellen Polymer B in Kombination mit Kieselsäure und einem geblockten oder ungeblockten Mercaptosilan als Silankupplungsagens sich besonders gut verarbeiten lässt. Das Polymer B wirkt dabei ähnlich einem Weichmacher. Dieses gute Verarbeitungsverhalten zeigte sich sogar bei Mischungen mit einem hohen Füllgrad und mit einem hohen Weichmacheranteil (zusammengesetzt aus Polymer B und weiteren vorhandenen Weichmachern).

Bei den mit der Mischung hergestellten Reifen konnte eine deutliche Verbesserung des Zielkonfliktes zwischen Wintereigenschaften/Abriebeigenschaften/Rollwiderstandseigenschaften und den Nassgriffeigenschaften erzielt werden.

Bei der in dieser Schrift verwendeten Angabe zur Polydispersität PD handelt es sich um den Quotienten aus dem gewichtsmittleren Molekulargewicht M_{w} und dem zahlenmittleren Molekulargewicht Mₙ der Polymere (PD = M_{w}/Mₙ).

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung bzw. im Blend vorhandenen hochmolekularen und dadurch in der Regel festen Kautschuke bezogen. Das erfindungsgemäß enthaltene Polymer B mit einem M_{w} von 1300 bis 10000 g/mol geht daher nicht als Kautschuk in die hundert Teile der phr-Berechnung ein.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure(n), das heißt, dass andere eventuell vorhandene Füllstoffe wie Ruß nicht in die Berechnung der Silanmenge mit eingehen.

Gemäß der Erfindung enthält der Kautschukblend für die Kautschukmischung ein hochmolekulares Dienpolymer A, welches in der Regel für sich allein betrachtet bei Raumtemperatur ein fester Kautschuk wäre, und einem niedermolekularen Polymer B, welches in der Regel für sich allein betrachtet bei Raumtemperatur flüssig wäre.

Bei dem hochmolekularen, lösungspolymerisierten Dienpolymer A aus zumindest einem konjugierten Dien und gegebenenfalls einer oder mehrerer vinylaromatischer Verbindungen kann es sich um unterschiedlichste Dienpolymere auf der Basis von z. B. Butadien, Isopren und Styrol handeln. Enthält das Dienpolymer A substituierte, konjugierte Dieneinheiten, so bezieht sich die Angabe des Vinylanteils äquivalent z. B. bei Isopreneinheiten auf die 3,4-verknüpften Anteile, während bei Vorhandensein von Butadieneinheiten sich die Angabe des Vinylanteils auf die 1,2-verknüpften Anteile bezieht.

Vorzugsweise handelt es sich bei dem Dienpolymer A um Polybutadien oder Styrol-Butadien-Kautschuk (Styrol-Butadien-Copolymer).

Der erfindungsgemäße Kautschukmischung enthält im Kautschukblend weiterhin ein niedermolekulares, lösungspolymerisiertes Polymer B aus zumindest einem konjugierten Dien
oder zumindest einem konjugierten Dien und einer oder mehrerer vinylaromatischen Verbindungen
oder zumindest einer oder mehrerer vinylaromatischen Verbindungen. Dabei kann es sich z. B. um niedermolekulares, flüssiges Polybutadien, um niedermolekulare Styrol-Butadien-Copolymere oder um harzähnliche Verbindungen auf der Basis von vinylaromatischen Verbindungen handeln.

Erfindungswesentlich ist, dass zumindest eines der Polymer A oder B zumindest eines der Polymere A oder B am Kettenende und/oder entlang der Polymerkette und/oder in einem Kopplungszentrum mit zumindest einer Gruppe ausgewählt aus Epoxygruppen, Hydroxygruppen, Carboxygruppen, Silan-Sulfidgruppen, Aminogruppen, Siloxangruppen, Organosiliciumgruppen, Phthalocyaningruppen und Aminogruppen enthaltenden Alkoxysilylgruppen funktionalisiert ist. Bei der Funktionalisierung ist es möglich, dass an einem Funktionalisierungszentrum oder einem Kopplungszentrum mehrere Polymerketten angebunden sind.

Die Funktionalisierungen ermöglichen eine optimale Verarbeitbarkeit in einer Kautschukmischung und bewirken in den Kautschukmischungen eine gute Füllstoff-Polymer-Wechselwirkung, was letztendlich in einem verbesserten Eigenschaftsbild resultiert.

Die Kautschukblends für die erfindungsgemäßen Kautschukmischungen können nach dem Fachmann bekannten Verfahren hergestellt werden. Beispielsweise können das Dienpolymer A und das Polymer B getrennt voneinander durch anionische Polymerisation in organischem Lösemittel mit späterer Zudosierung von Funktionalisierungsreagenzien erzeugt werden. Dann werden die beiden Reaktionslösungen vereinigt und gemeinsam zu einen Kautschukblend ohne Lösemittel aufgearbeitet (Entfernung von Lösemittel z. B. durch Destillation oder Vakuumverdampfung), so dass man einen gut transportier- und verarbeitbaren Blend erhält.

Gemäß einer bevorzugten Weiterbildung der Erfindung ist zumindest das niedermolekulare, lösungspolymerisierte Polymer B mit den genannten Gruppen funktionalisiert. Auf diese Weise gelingt eine gute Verteilung des Polymers B in der Polymermatrix und Füllstoffe können gut angebunden werden.

Besonders bevorzugt ist es, wenn auch das hochmolekulare, lösungspolymerisierte Dienpolymer A funktionalisiert ist. Dadurch werden die Verarbeitbarkeit und die positive Beeinflussung der Eigenschaften daraus resultierender Kautschukmischungen weiter verbessert.

Die Polymere A oder B sind mit unterschiedlichsten Gruppen funktionalisiert. Dabei kann es sich z. B. um Organosiliciumgruppen der folgenden Struktur I) handeln:

I) (R¹R²R³)Si-

wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Funktionalisierung gemäß Formel I) direkt oder über eine Brücke an die Polymerkette des Polymers angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann. Die Reste R¹, R², R³ sind vorzugsweise Alkoxygruppen, z. B. eine Ethoxygruppen. Ist die Struktur I) über eine

Brücke an das Polymer gebunden kann es sich z. B. um die Anbindung einer folgenden Struktur II) handeln

II) (R¹R²R³)Si-Y-X-

wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester, ist. X und Y bilden hierbei die Brücke.

Um besonders gute Eigenschaften der Kautschukmischungen zu erhalten, hat es sich als vorteilhaft erwiesen, wenn zumindest eines der Polymere A oder B am Kettenende mit einer Aminogruppen-enthaltenden Alkoxysilylgruppe und wenigstens einer weiteren Aminogruppe und/oder wenigstens einer weiteren Alkoxysilylgruppe und/oder wenigstens einer weiteren Aminogruppen-enthaltenden Alkoxysilylgruppe funktionalisiert ist, wobei die Aminogruppen mit oder ohne Spacer an das Kettenende der Polymerkette gebunden sind.

Ebenfalls gute Mischungseigenschaften lassen sich erzielen, wenn zumindest eines der Polymere A oder B am Kettenende und/oder entlang der Polymerkette und/oder in einem Kopplungszentrum mit einer Silan-Sulfidgruppe funktionalisiert. Unter Silan-Sulfidgruppen werden im Rahmen der vorliegenden Erfindung organische Reste bezeichnet, die wenigstens ein Schwefelatom und wenigstens eine substituierte SilylGruppe -SiR₃ enthalten.

Es wurde gefunden, dass mit einem funktionalisierten Polymer, das mit wenigstens einer Silan-Sulfidgruppe funktionalisiert ist, gegenüber einem funktionalisierten Polymer, das mit Siloxy,- Siloxan, Siloxy-Aldimin- oder Aminosiloxan-Gruppen, die jedoch schwefelfrei sind, also keine Schwefelatome enthalten, funktionalisiert ist, verbesserte physikalische Eigenschaften erzielt werden, wie insbesondere verbesserte Rollwiderstandsindikatoren und/oder ein verbessertes Abriebverhalten und/oder verbesserte Reißeigenschaften und/oder verbesserte Handling-Prediktoren, wie insbesondere eine erhöhte Steifigkeit, und/oder verbesserte Nassgriffeigenschaften. Polymere, die mit Silan-Sulfidgruppen funktionalisiert sind, sind beispielsweise in der EP 2 853 558 A1 offenbart. Sie können durch anionische Polymerisation in Anwesenheit eines Silan-Sulfid-Funktionalisierungsreagenz erhalten werden. Als Silan-Sulfid-Funktionalisierungsreagenz können z. B. (MeO)₂(Me)Si-(CH₂)₂-S-SiMe₂C(Me)₃, (MeO)₂(Me)Si-(CH₂)₂-S-SiMe₂C(Me)₃ oder (MeO)₃Si-(CH₂)₂-S-SiMe₂C(Me)₃ eingesetzt werden.

Bevorzugt ist außerdem, wenn zumindest eines der Polymere A oder B am Kettenende und/oder entlang der Polymerkette und/oder in einem Kopplungszentrum mit einer Siloxangruppe funktionalisiert ist. Derartige Siloxangruppen werden beispielsweise in der WO 2009077295 A1 und der WO 2009077296 Aloffenbart.

Gemäß einer bevorzugten Weiterbildung der Erfindung weist zumindest eines der Polymere A oder B ein Kopplungszentrum auf. Bei diesen Kopplungszentren kann es sich z. B. um Zinn (Sn) oder Silicium (Si) handeln.

Um eine besonders gut verarbeitbare Kautschukmischung zu erhalten, hat es sich als vorteilhaft erwiesen, wenn der Kautschukblend 5 bis 100 phr (bezogen auf das zumindest eine hochmolekulare, lösungspolymerisierte Dienpolymer A) des zumindest einen niedermolekularen, lösungspolymerisierten Polymers B aufweist. Er kann also ein Gewichtsverhältnis von Dienpolymer A zu Polymer B von bis zu 1:1 aufweisen.

Das Verarbeitungsverhalten lässt sich weiter verbessern, indem der Kautschukblend für die Kautschukmischung eine Mooney-Viskosität (ML1+4, 100 °C gemäß ASTM-D 1646) von 40 bis 100 Mooney-Einheiten aufweist.

Die erfindungsgemäße schwefelvernetzbare Kautschukmischung mit den verbesserten Wintereigenschaften und/oder Abriebeigenschaften und/oder Rollwiderstandseigenschaften ohne Beeinträchtigungen in den Nassgriffeigenschaften bei Einsatz im Fahrzeugreifen enthält neben dem Kautschukblend gemäß Anspruch 1 und 30 bis 300 phr, bevorzugt 20 bis 250 phr, besonders bevorzugt 20 bis 150 phr und ganz besonders bevorzugt 80 bis 110 phr, wenigstens einer Kieselsäure. Durch die Anwesenheit zumindest eines Polymers A oder B, das funktionalisiert ist, kann eine optimale Verteilung der Kieselsäure in der Polymermatrix erfolgen, wobei gleichzeitig eine gute Anbindung der Kieselsäure an die Polymere über die funktionellen Gruppen erfolgen kann. Dies führt zu einem verbesserten Eigenschaftsbild.

Bei der vorhandenen Kieselsäure kann es sich um die dem Fachmann bekannten Kieselsäuretypen, die üblicherweise als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 120 bis 235 m²/g, und eine CTAB-Oberfläche (gemäß ASTM D 3765) von 30 bis 400 m²/g, bevorzugt von 50 bis 330 m²/g, besonders bevorzugt von 100 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen.

Die erfindungsgemäße Kautschukmischung enthält ferner 1 bis 20 phf, vorzugsweise 1 bis 15 phf zumindest eines geblockten und/oder ungeblockten Mercaptosilans als Silankupplungsagens.

Silankupplungsagenzien werden zur weiteren Verbesserung der Verarbeitbarkeit und zur Anbindung der Kieselsäure und anderer ggf. vorhandener polarer Füllstoffe an Dienkautschuk in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Mercaptosilane enthalten. Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind Acylgruppen. Als Mercaptosilane können alle dem Fachmann für die Verwendung in Kautschukmischungen bekannten Mercaptosilane verwendet werden. Solche aus dem Stand der Technik bekannten Mercaptosilane sind z. B. aus der WO 99/09036 bekannt. Auch Mercaptosilane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA vertrieben werden.

Gemäß einer bevorzugten Ausführungsform der Erfindung enthält die Kautschukmischung als geblocktes Mercaptosilan 3-Octanoylthio-1-propyltriethoxysilan.

Weiterhin kann die Kautschukmischung weitere Aktivatoren und/oder Agenzien für die Anbindung von Füllstoffen, insbesondere Ruß, enthalten. Hierbei kann es sich beispielsweise um die z. B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Die Kautschukmischung kann neben dem speziellen Kautschukblend weitere Kautschuke enthalten.

Diese weiteren Kautschuke können dabei ausgewählt sein aus der Gruppe, bestehend aus natürlichem Polyisopren, synthetischem Polyisopren, Butadien-Kautschuk, lösungspolymerisiertem Styrol-Butadien-Kautschuk, emulsionspolymerisiertem Styrol-Butadien-Kautschuk, Halobutylkautschuk, Polynorbornen, Isopren-Isobutylen-Copolymer, Ethylen-Propylen-Dien-Kautschuk, Nitrilkautschuk, Chloroprenkautschuk, AcrylatKautschuk, Fluorkautschuk, Silikon-Kautschuk, Polysulfidkautschuk, Epichlorhydrinkautschuk, Styrol-Isopren-Butadien-Terpolymer, hydriertem Acrylnitrilbutadienkautschuk, Isopren-Butadien-Copolymer und hydriertem Styrol-Butadien-Kautschuk.

Bevorzugt handelt es sich bei den weiteren Kautschuken um wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bevorzugt ist der wenigstens eine Dienkautschuk ausgewählt aus der Gruppe bestehend aus synthetischem Polyisopren (IR) und natürlichem Polyisopren (NR) und Styrol-Butadien-Kautschuk (SBR) und Polybutadien (BR).

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisopren(en) denkbar.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Bei dem Styrol-Butadien-Kautschuk als weiterem Kautschuk kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Vorzugsweise beträgt der Anteil des Dienpolymers A des Kautschukblends in der Kautschukmischung wenigstens 50 phr bezogen auf die Gesamtmenge der in der Kautschukmischung vorhandenen Festkautschuke, wobei - wie bereits oben erwähnt- das niedermolekulare Polymer B nicht mit in die Bestimmung der hundert Kautschukteile für die phr-Grundlage mit einfließt.

Neben der Kieselsäure kann die Kautschukmischung weitere, dem Fachmann bekannte Füllstoffe in üblichen Mengen enthalten. Hierbei kann es sich um Ruß oder andere Füllstoffe, wie beispielsweise Alumosilicate, Kaolin, Kreide, Stärke, Magnesiumoxid, Titandioxid, Kautschukgele, Fasern (wie zum Beispiel Aramidfasern, Glasfasern, Carbonfasern, Cellulosefasern), Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und CarbonylGruppen), Graphit und Graphene und sogenannte "carbon-silica dual-phase filler" handeln.

Als Ruße kommen alle der fachkundigen Person bekannten Rußtypen in Frage.

In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden. Die Gesamtmenge an enthaltenen Rußen entspricht aber maximal 300 phr.

Gemäß einer bevorzugten Weiterbildung der Erfindung enthält die Kautschukmischung 0,1 bis 20 phr Ruß. Bei diesen geringen Rußmengen könnten bei besten Reifeneigenschaften in Hinblick auf den Rollwiderstand und den Nassgriff erzielt werden.

Die erfindungsgemäße Kautschukmischung kann bis zu 150 phr, vorzugsweise 80 phr, wenigstens eines Weichmachers enthalten.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z. B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder weitere Flüssig-Polymere abweichend von Polymer B. Der oder die Weichmacher werden bei der Herstellung der erfindungsgemäßen Kautschukmischung bevorzugt in wenigstens einer Grundmischstufe zugegeben.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), N, N'- bis-(1,4- Dimethylpentyl)-p-Phenylenediamin (77PD)
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD und
f) Verarbeitungshilfsmittel, wie z. B. Fettsäuresalze, wie z. B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.

Schwefel und/oder weitere Schwefelspender sowie ein oder mehrere Beschleuniger werden im letzten Mischungsschritt der Kautschukmischung in üblichen Mengen zugesetzt. Dabei ist der Beschleuniger ausgewählt aus der Gruppe bestehend aus Thiazolbeschleunigern, Mercaptobeschleunigern und/oder Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Bevorzugt ist die Verwendung wenigstens eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert.Butyl-2-benzothiazylsulfenamid (TBBS), und/oder eines Guanidin-Beschleunigers, z. B. Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehen aus z. B. Thiuramdisulfide, wie z. B. Tetrabenzylthiuramdisulfid (TBzTD), Tetramethylthiuramdisulfid (TMTD), Tetraethylthiuramdisulfid (TETD), Bis[3-(triethoxysilyl)propyl]tetrasulfid (TESPT), Thiuramtetrasulfide, wie z. B. Dipentamethylenthiuramtetrasulfid (DPTT), Dithiophosphate, wie z. B.DipDis (Bis-(Diisopropyl)thiophosphoryldisulfid), Bis(O,O-2-ethylhexyl-thiophosphoryl)Polysulfid (z. B. Rhenocure SDT 50®, Rheinchemie GmbH), Zinkdichloryldithiophosphat (z. B. Rhenocure ZDT/S®, Rheinchemie GmbH), Zinkalkyldithiophosphat, 1,6-Bis(N,N-dibenzylthiocarbamoyldithio)hexan, Diarylpolysulfiden und Dialkylpolysulfiden.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Außerdem können in der Kautschukmischung Vulkanisationsverzögerer vorhanden sein.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiartikel, wie Bälge, Förderbänder, Luftfedern, Gurte, Riemen, Schläuche oder Schuhsohlen, eingesetzt werden.

Vorzugsweise findet die Kautschukmischung jedoch Anwendung in Fahrzeugreifen, wobei darunter Fahrzeugluftreifen und Vollgummireifen, inklusive Reifen für Industrie- und Baustellenfahrzeuge, LKW-, PKW- sowie Zweiradreifen zu verstehen sind.

Die erfindungsgemäße Kautschukmischung kann in unterschiedlichen Bauteilen von Fahrzeugreifen, insbesondere Fahrzeugluftreifen, eingesetzt werden. Dabei kann es sich z. B. um die Seitenwand, das Hornprofil sowie innere Reifenbauteile handeln. Bevorzugt wird die Kautschukmischung jedoch für den mit der Fahrbahn in Berührung kommenden Teil des Laufstreifens eines Fahrzeugreifens eingesetzt. Dadurch erhält man Reifen, die sich durch verbesserte Wintereigenschaften und/oder Abriebeigenschaften und/oder Rollwiderstandseigenschaften auszeichnen, ohne dass dabei die Nassgriffeigenschaften beeinträchtigt werden.

Der Laufstreifen kann ganz oder nur zu einem Teil aus der Kautschukmischung bestehen. So kann der Laufstreifen beispielsweise eine Cap/Base-Konstruktion aufweisen, wobei nur die Cap oder nur die Base aus der Kautschukmischung gemäß Anspruch 1 bestehen können. Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap). Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder **Laustreifenbase).**

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Bei der Herstellung der Fahrzeugreifen wird die Mischung in Form des gewünschten Bauteils extrudiert und nach bekannten Verfahren auf den Reifenrohling aufgebracht. Es ist auch möglich, dass das Bauteil durch das Aufwickeln eines schmalen Kautschukmischungsstreifens erzeugt wird. In Anschluss wird der Reifen unter üblichen Bedingungen vulkanisiert.

Die Erfindung soll nun anhand von Vergleichs- und Ausführungsbeispielen näher erläutert werden.

### Herstellung der Kautschukblends:

### Copolymerisation von 1,3-Butadien mit Styrol (Dienpolymer A)

Die Copolymerisation wurde in einem doppelwandigen 40 L-Stahlreaktor durchgeführt, der vor der Zugabe des organischen Lösemittels, der Monomere, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösemittel (18.560 g), Butadien-Monomer (1.777 g), Styrol-Monomer (448 g) und Tetramethylethylendiamin (TMEDA, 1,0 g), und die Mischung wurde auf 40°C erhitzt, gefolgt von Titration mit n-Butyllithium zur Entfernung von Feuchtigkeitsspuren oder anderen Verunreinigungen. n-BuLi (14,08 mmol) wurde zum Starten der Polymerisationsreaktion in den Polymerisationsreaktor hinzugegeben. Die Polymerisation wurde für 20 min durchgeführt, wobei die Polymerisationstemperatur auf nicht mehr als 70°C ansteigen gelassen wurde. Dann wurden Butadien (1.202 g) und Styrol (91 g) als Monomere über 55 min hinweg hinzugegeben. Die Polymerisation wurde für weitere 20 min durchgeführt, gefolgt von der Zugabe von 63 g Butadien-Monomer. Nach 20 min wurde die Polymerisation durch Zugabe von Hexamethylcyclotrisiloxan (D3) zur Funktionalisierung abgebrochen (0,5 Äquivalente auf Basis des Initiators). Das entstandene Polymer ist Siloxangruppen funktionalisiert. Zur Polymerlösung wurde 0,25 Gew.-% IRGANOX® 1520, BASF, bezogen auf das Monomer-Gesamtgewicht, als Stabilisator hinzugegeben. Diese Mischung wurde für 10 min gerührt.

Zur Herstellung des unfunktionalisierten Polymeren A-1 wurde anstelle des Hexamethylcyclotrisiloxan (D3) die Polymerisationsreaktion durch Zugabe von Methanol beendet.

### Copolymerisation von 1,3-Butadien mit Styrol (Polymer B mit niedrigem Molekulargewicht)

Die Copolymerisation wurde in einem doppelwandigen 5 L-Stahlreaktor durchgeführt, der vor der Zugabe des organischen Lösemittels, der Monomere, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösungsmittel (3000 g), Tetrahydrofuran (45 g), Butadien-Monomer (375 g), Styrol-Monomer (125 g) und die Mischung wurde auf 25 °C erhitzt, gefolgt von Titration mit n-Butyllithium zur Entfernung von Feuchtigkeitsspuren oder anderen Verunreinigungen. n-BuLi (5,6 g) wurde zum Starten der Polymerisationsreaktion in den Polymerisationsreaktor hinzugegeben. Die Polymerisation wurde für 15 min durchgeführt, wobei die Polymerisationstemperatur auf nicht mehr als 70°C ansteigen gelassen wurde. Nach 15 min wurde die Polymerisation durch Zugabe von Hexamethylcyclotrisiloxan (D3) zur Funktionalisierung abgebrochen (0,5 Äquivalente auf Basis des Initiators). Das entstandene Polymer ist Siloxangruppen funktionalisiert. Zur Polymerlösung wurde 0,25 Gew.-% IRGANOX® 1520, BASF bezogen auf das Monomer-Gesamtgewicht, als Stabilisator hinzugegeben. Diese Mischung wurde für 10 min gerührt. Zur Herstellung des unfunktionalisierten Vergleichspolymeren B-1 wird anstelle des Hexamethylcyclotrisiloxan (D3) die Polymerisationsreaktion durch Zugabe von Methanol beendet.

### Copolymerisation von 1,3-Butadien mit Styrol (Dienpolymer C)

Die Copolymerisation wurde in einem doppelwandigen 40 L-Stahlreaktor durchgeführt, der vor der Zugabe des organischen Lösemittels, der Monomere, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösemittel (18.560 g), Butadien-Monomer (1.412 g), Styrol-Monomer (507 g) und Tetramethylethylendiamin (TMEDA, 7,8 g), und die Mischung wurde auf 40°C erhitzt, gefolgt von Titration mit n-Butyllithium zur Entfernung von Feuchtigkeitsspuren oder anderen Verunreinigungen. n-BuLi (8,32 mmol) wurde zum Starten der Polymerisationsreaktion in den Polymerisationsreaktor hinzugegeben. Die Polymerisation wurde für 20 min durchgeführt, wobei die Polymerisationstemperatur auf nicht mehr als 70°C ansteigen gelassen wurde. Dann wurden Butadien (955 g) und Styrol (103 g) als Monomere über 55 min hinweg hinzugegeben. Die Polymerisation wurde für weitere 20 min durchgeführt, gefolgt von der Zugabe von 50 g Butadien-Monomer. Nach 20 min wurde das Polymer durch Zugabe von 3-tert-Butyldimethylsilylthiopropyldimethoxymethylsilan [(MeO)₂(Me)Si-(CH₂)₃-S-SiMe₂C(Me)₃] funktionalisiert (0,97 Äquivalente auf Basis des Initiators). Nach weiteren 20 min wurde die Polymerisation durch Zugabe von Methanol beendet. Das entstandene Polymer ist Silansulfidgruppen funktionalisiert. Zur Polymerlösung wurde 0,25 Gew.-% IRGANOX® 1520, BASF, bezogen auf das Monomer-Gesamtgewicht, als Stabilisator hinzugegeben. Diese Mischung wurde für 10 min gerührt.

### Polymerisation von 1,3-Butadien (Polymer D-1 und D-2 mit niedrigem Molekulargewicht)

Die Polymerisation wurde in einem doppelwandigen 5 L-Stahlreaktor durchgeführt, der vor der Zugabe des organischen Lösemittels, des Monomeren, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösungsmittel (3000 g), 2,2-Ditetrahydrofurylpropan (1,05 g), Butadien-Monomer (409 g) und die Mischung wurde auf 40 °C erhitzt, gefolgt von Titration mit n-Butyllithium zur Entfernung von Feuchtigkeitsspuren oder anderen Verunreinigungen. n-BuLi (5,2 g) wurde zum Starten der Polymerisationsreaktion in den Polymerisationsreaktor hinzugegeben. Die Polymerisation wurde für 15 min durchgeführt, wobei die Polymerisationstemperatur auf nicht mehr als 70 °C ansteigen gelassen wurde. Nach 15 min wurde das Polymer durch Zugabe von 3-tert-Butyldimethylsilylthiopropylmethoxydimethylsilan zur Funktionalisierung abgebrochen (0,97 Äquivalente auf Basis des Initiators). Nach 60 min werden die verbliebenen lebenden Polymerketten durch Zugabe von Methanol terminiert. Das entstandene Polymer ist Silansulfidgruppen funktionalisiert. Zur Polymerlösung wurde 0,25 Gew.-% IRGANOX® 1520, BASF bezogen auf das Monomer-Gesamtgewicht, als Stabilisator hinzugegeben. Diese Mischung wurde für 10 min gerührt.

Zur Herstellung des unfunktionalisierten Polymeren D-1 wird anstelle des 3-tert-Butyldimethylsilylthiopropylmethoxydimethylsilan [(MeO)(Me)₂Si-(CH₂)₃-S-SiMe₂C(Me)₃] die Polymerisationsreaktion durch Zugabe von Methanol beendet.

### Copolymerisation von 1,3-Butadien mit Styrol (Polymer D-3 und D-4 mit niedrigem Molekulargewicht)

Die Copolymerisation wurde in einem doppelwandigen 5 L-Stahlreaktor durchgeführt, der vor der Zugabe des organischen Lösemittels, der Monomere, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösungsmittel (3000 g), Tetrahydrofuran (45 g), Butadien-Monomer (400 g), Styrol-Monomer (100 g) und die Mischung wurde auf 25 °C erhitzt, gefolgt von Titration mit n-Butyllithium zur Entfernung von Feuchtigkeitsspuren oder anderen Verunreinigungen. n-BuLi (5,7 g) wurde zum Starten der Polymerisationsreaktion in den Polymerisationsreaktor hinzugegeben. Die Polymerisation wurde für 15 min durchgeführt, wobei die Polymerisationstemperatur auf nicht mehr als 70°C ansteigen gelassen wurde. Nach 15 min wurde das Polymer durch Zugabe von 3-tert-Butyldimethylsilylthiopropylmethoxydimethylsilan zur Funktionalisierung abgebrochen (0,97 Äquivalente auf Basis des Initiators). Nach 60 min werden die verbliebenen lebenden Polymerketten durch Zugabe von Methanol terminiert. Das entstandene Polymer ist Silansulfidgruppen funktionalisiert. Zur Polymerlösung wurde 0,25 Gew.-% IRGANOX® 1520, BASF bezogen auf das Monomer-Gesamtgewicht, als Stabilisator hinzugegeben. Diese Mischung wurde für 10 min gerührt.

Zur Herstellung des unfunktionalisierten Polymeren D-3 wird anstelle des 3-tert-Butyldimethylsilylthiopropylmethoxydimethylsilan [(MeO)(Me)₂Si-(CH₂)₃-S-SiMe₂C(Me)₃] die Polymerisationsreaktion durch Zugabe von Methanol beendet.

In Tabelle 1 sind die analytischen Daten der Polymere A bis D aufgeführt.

**Tabelle 1**

| | M_{w} [g/mol] | Mₙ [g/mol] | Mooney-Viskosität | Vinylanteil [Gew.-%] | Styrolanteil [Gew.-%] | T_{g} [°C] |
|---|---|---|---|---|---|---|
| Dienpolymer A (funktionalisiert) | 436080 | 396421 | 92,5 | 29,3 | 15,0 | - 60,5 |
| Dienpolymer A-1 (unfunktionalisiert) | 438020 | 393900 | 95,3 | 29,2 | 15,1 | - 60,6 |
| Polymer B-1 (unfunktionalisiert) | 9450 | 7800 | n. b. | 66,0 | 25,0 | - 32 |
| Polymer B | 9450 | 7800 | n. b. | 66,0 | 25,0 | - 32 |
| Dienpolymer C (funktionalisiert) | 568000 | 418000 | 91,7 | 59,1 | 19,1 | - 22,5 |
| Polymer D-1 (unfunktionalisiert) | 8280 | 7990 | n. b. | 20 | 0 | - 83 |
| Polymer D-2 (funktionalisiert) | 9260 | 8860 | n. b. | 21 | 0 | - 83 |
| Polymer D-3 (unfunktionalisiert) | 8340 | 7840 | n. b. | 67 | 20 | -19,1 |
| Polymer D-4 (funktionalisiert) | 9230 | 8500 | n. b. | 63 | 22 | -21 |

Die Polymerlösungen von Dienpolymer A bzw. A-1 und 2,149 Ansätze von Polymer B bzw. B-1 wurden in verschiedenen Kombinationen vereinigt. Anschließend wurde mit Wasserdampf gestrippt, um Lösemittel und andere flüchtige Stoffe zu entfernen, und in einem Ofen bei 70°C für 30 min und dann zusätzliche für drei Tage bei Raumtemperatur getrocknet. Die auf diese Weise erhaltenen Kautschukblends enthielten bezogen auf 100 Teile des Dienpolymers A bzw. A-1 und 30 Teile (phr) des Polymers B bzw. B-1.

Zur Herstellung der reinen Polymere A/B bzw. A-1/B-1 wurden die Polymerlösungen aus den Ansätzen zur Herstellung dieser Komponenten direkt, d. h. ohne Vereinigung mit einer anderen Polymerlösung aufgearbeitet.

In Tabelle 2a sind die Bezeichnungen der verschiedenen hergestellten Blends aufgeführt. Mit E werden erfindungsgemäße Blends bezeichnet, mit V die entsprechenden Vergleichsblends. Zusätzlich sind der Tabelle 2a die Mooneyviskositäten der jeweiligen Blends in MU (Mooney-Units) als analytische Kennzahl aufgeführt.

**Tabelle 2a**

| | Gehalt Polymer A (phr) | Gehalt Polymer A-1 (phr) | Gehalt Polymer B (phr) | Gehalt Polymer B-1 (phr) | Mooney Viskosität (ML 1+4) (MU) |
|---|---|---|---|---|---|
| Kautschukbend V | 0 | 100 | 0 | 30 | 61 |
| Kautschukblend E-1 | 100 | 0 | 0 | 30 | 62 |
| Kautschukblend E-2 | 0 | 100 | 30 | 0 | 62 |
| Kautschukblend E-3 | 100 | 0 | 30 | 0 | 65 |

Ebenso wurden Anteile der Polymerlösungen von Dienpolymer C und Anteile der Polymerlösungen der Ansätze von Polymer D-1 bzw. D-2 bzw. D-3 bzw. D-4 so vereinigt, dass das Gewichtsverhältnis bezogen auf das enthaltene Polymer C zum enthaltenen Polymer D-1 bzw. D-2 bzw. D-3 bzw. D-4 bei 100 zu 20 liegt. Anschließend wurde mit Wasserdampf gestrippt, um Lösemittel und andere flüchtige Stoffe zu entfernen, und in einem Ofen bei 70°C für 30 min und dann zusätzlich für drei Tage bei Raumtemperatur getrocknet. Die auf diese Weise erhaltenen Kautschukblends enthielten bezogen auf 100 Teile des Dienpolymers C je 20 Teile (phr) des Polymers D-1 bzw. D-2 bzw. D-3 bzw. D-4.

In Tabelle 2b sind die Bezeichnungen dieser verschiedenen hergestellten Blends aufgeführt. Mit E werden auch hier erfindungsgemäße Blends bezeichnet. Zusätzlich sind der Tabelle 2b die Mooneyviskositäten der jeweiligen Blends in MU (Mooney-Units) als analytische Kennzahl aufgeführt.

**Tabelle 2b**

| | Gehalt Polymer C (phr) | Gehalt Polymer D-1 (phr) | Gehalt Polymer D-2 (phr) | Gehalt Polymer D-3(phr) | Gehalt Polymer D-4 (phr) | Mooney Viskosität (ML 1+4) (MU) |
|---|---|---|---|---|---|---|
| Kautschukblend E-4 | 100 | 20 | 0 | 0 | 0 | 64,9 |
| Kautschukblend E-5 | 100 | 0 | 20 | 0 | 0 | 66,1 |
| Kautschukblend E-6 | 100 | 0 | 0 | 20 | 0 | 76,6 |
| Kautschukblend E-7 | 100 | 0 | 0 | 0 | 20 | 75,7 |

Mit den Kautschukblends der Tabelle 2a wurden die Kautschukmischungen der Tabelle 3 erstellt mit dem Kautschukblend V aus den nicht-funktionalisierten Polymeren A-1 und B-1 sowie den Kautschukblends E-1 bis E-3 mit TESPD als Silankupplungsagens als Vergleichsmischungen V1 bis V5. Weiterhin sind die erfindungsgemäßen Kautschukmischungen E1 bis E3 mit den Kautschukblends E-1 bis E-3 in Kombination mit einem geblockten und/oder ungeblockten Mercaptosilans als Silankupplungsagens hergestellt worden.

**Tabelle 3**

| **Bestandteile** | **Einheit** | **V1** | **V2** | **V3** | **V4** | **V5** | **E1** | **E2** | **E3** |
|---|---|---|---|---|---|---|---|---|---|
| BR^{a} | phr | 20 | 20 | 20 | 20 | 20 | 20 | 20 | 20 |
| Blend V | phr | 104 | - | - | - | 104 | - | - | - |
| Blend E-1 | phr | - | 104 | - | - | - | 104 | - | - |
| Blend E-2 | phr | - | - | 104 | - | - | - | 104 | - |
| Blend E-3 | phr | - | - | - | 104 | - | - | - | 104 |
| Ruß N339 | phr | 9 | 9 | 9 | 9 | 9 | 9 | 9 | 9 |
| Kieselsäure^{e} | phr | 90 | 90 | 90 | 90 | 90 | 90 | 90 | 90 |
| Silankupplungsagens^{f} | phr | 6,5 | 6,5 | 6,5 | 6,5 | -- | -- | -- | -- |
| Silankupplungsagens^{g} | phr | -- | -- | -- | -- | 9,2 | 9,2 | 9,2 | 9,2 |
| ZnO | phr | 2 | 2 | 2 | 2 | 2 | 2 | 2 | 2 |
| Alterungsschutzmittel /Ozonschutzmittel/ Stearinsäure | phr | 5 | 5 | 5 | 5 | 5 | 5 | 5 | 5 |
| Verarbeitungshilfsmittel^{j} | phr | 3 | 3 | 3 | 3 | 3 | 3 | 3 | 3 |
| DPG | phr | 2 | 2 | 2 | 2 | 2 | 2 | 2 | 2 |
| CBS | phr | 2,6 | 2,6 | 2,6 | 2,6 | 2,6 | 2,6 | 2,6 | 2,6 |
| Schwefel | phr | 2,1 | 2,1 | 2,1 | 2,1 | 2,1 | 2,1 | 2,1 | 2,1 |

| | | | | | | | | | |
|---|---|---|---|---|---|---|---|---|---|
| ^{a} BR mit cis-Anteil größer 80 Gew. -%; ^{e} Zeosil 1165MP, Fa. Rhodia (BET 149 m²/g, CTAB 154 m²/g); ^{f} TESPD Si261, Fa. Evonik; ^{g} 3-Octanoylthio-1-propyltriethoxysilan, NXT, Fa Momentive ^{j} Aktiplast TS, Fa. Rheinchemie; | | | | | | | | | |

Die in der Tabelle 4 zusammengefassten Versuchsergebnisse wurden an Reifen der Größe 195/65 R15 mit dem Reifenprofil des ContiWinterContact TS830 ermittelt. Hierzu wurde jeweils die Kautschukmischung für die Lauffläche des Reifens analog den in der Tabelle 3 dargestellten Zusammensetzungen hergestellt. Alle Ergebnisse sind als relative Bewertung mit einer Basis von 100 % für den Reifen V1 angegeben. Werte über 100 % sind dem Vergleichsreifen V1 überlegen und stellen eine Verbesserung dar.

Das ABS-Nassbremsverhalten wurde bestimmt durch den Bremsweg aus 80 km/h bei nasser Fahrbahn.

Das ABS-Trockenbremsverhalten wurde bestimmt durch den Bremsweg aus 100 km/h bei trockener Fahrbahn.

Der Rollwiderstand entspricht der Rollwiderstandskraft, die auf der entsprechenden Maschine bei 90 km/h gemessen wird.

Die Werte für den Abrieb stellen den Gewichtsverlust des Reifens nach 10.000 gefahrenen Kilometern dar.

Zur Beureilung der Wintereigenschaften wird die Schneetraktion, d. h. die Traktionskraft bei einer Beschleunigungsfahrt auf einer Schneefahrbahn ermittelt.

**Tabelle 4**

| **Reifeneigenschaft** | **V1** | **V2** | **V3** | **V4** | **V5** | **E1** | **E2** | **E3** |
|---|---|---|---|---|---|---|---|---|
| ABS-Trockenbremsen | 100 | 100 | 101 | 103 | 96 | 97 | 98 | 100 |
| ABS-Nassbremsen | 100 | 100 | 102 | 101 | 99 | 100 | 101 | 102 |
| Rollwiderstand | 100 | 104 | 104 | 108 | 106 | 111 | 111 | 116 |
| Wintereigenschaften | 100 | 100 | 101 | 101 | 103 | 105 | 104 | 106 |
| Abrieb | 100 | 106 | 106 | 106 | 104 | 109 | 109 | 110 |
| Processing | o | o | o | - | + | + | + | o |

Anhand der Tabelle 4 zeigt sich, dass durch die Verwendung der speziellen Kautschukblends in Kombination mit einem geblockten und/oder ungeblockten Mercaptosilans als Silankupplungsagens eine deutliche Verbesserung hinsichtlich Rollwiderstand, Wintereigenschaften und Abrieb bietet, ohne die Nassgriffeigenschaften zu verschlechtern, siehe E1 bis E3. Das Trockenbremsverhalten bleibt dadurch praktisch unbeeinflusst oder ist ebenfalls leicht verbessert. Wie weiterhin zu erkennen ist, ergeben sich diese Vorteile allerdings nur dann, wenn ein Bestandteil des Kautschukblends E funktionalisiert ist. Ebenso haben die Mischungen, die die erfindungsgemäßen Kautschukblends enthalten, Vorteile im Prozessverhalten (+ = sehr gut, o = gut, - = mit Schwierigkeiten) gegenüber den übrigen Mischungen.

Ferner wurden mit den Kautschukblends der Tabelle 2b die Kautschukmischungen der Tabelle 5 erstellt. Als Vergleichsmischungen sind mit den Mischungen V6, V7, V13 und V14 auch Mischungen mit einem funktionalisierten SBR eingeführt. In V7 und V13 wird bei der Mischungsherstellung ein flüssiges SBR zugegeben. Die Mischungen V6 bis V11 enthalten TESPD als Silankupplungsagens, während die Mischungen V12, V13 und E4 bis E7 ein Mercaptosilans als Silankupplungsagens aufweisen. Die Mischungsherstellung erfolgte unter üblichen Bedingungen unter Herstellung einer Grundmischung und anschließend der Fertigmischung in einem Labortangentialmischer. Aus sämtlichen Mischungen wurden Prüfkörper durch optimale Vulkanisation unter Druck bei 160 °C hergestellt und mit diesen Prüfkörpern die für die Kautschukindustrie typischen Materialeigenschaften mit den folgenden Testverfahren ermittelt.
- Shore-A-Härte bei Raumtemperatur und 70°C mittels Durometer gemäß DIN ISO 7619-1
- Rückprallelastizität (Rü-Pra) bei Raumtemperatur und 70°C gemäß DIN 53 512
- Verlustfaktor tan δ bei 0 °C und 70 °C aus dynamisch-mechanischer Messung gemäß DIN 53 513 bei einer Vorkompression von 10 % mit einer Dehnungsamplitude von ± 0,2 % und einer Frequenz von 10 Hz (Temperatursweep)
- Abrieb bei Raumtemperatur gemäß DIN53 516 bzw. neu DIN/ISO 4649

**Tabelle 5**

| **Bestandteile** | **Einh.** | **V6** | **V7** | **V8** | **V9** | **V10** | **V11** | **V12** | **V13** | **E4** | **E5** | **E6** | **E7** |
|---|---|---|---|---|---|---|---|---|---|---|---|---|---|
| NR | phr | 10 | 10 | 10 | 10 | 10 | 10 | 10 | 10 | 10 | 10 | 10 | 10 |
| SBR^{b} | phr | 90 | 90 | - | - | - | - | 90 | 90 | - | - | - | - |
| Blend E-4 | phr | - | - | 108 | - | - | - | - | - | 108 | - | - | - |
| Blend E-5 | phr | - | - | - | 108 | - | - | - | - | - | 108 | - | - |
| Blend E-6 | phr | - | - | - | - | 108 | - | - | - | - | - | 108 | - |
| Blend E-7 | phr | - | - | - | - | - | 108 | - | - | - | - | - | 108 |
| Flüssig SBR^{c} | phr | - | 18 | - | - | - | - | - | 18 | - | - | - | - |
| Weichmacheröl^{d} | phr | 35 | 17 | 17 | 17 | 17 | 17 | 35 | 17 | 17 | 17 | 17 | 17 |
| Kieselsäure^{h} | phr | 95 | 95 | 95 | 95 | 95 | 95 | 95 | 95 | 95 | 95 | 95 | 95 |
| Silank.-agens^{f} | phr | 6,8 | 6,8 | 6,8 | 6,8 | 6,8 | 6,8 | - | - | - | - | - | - |
| Silank.-agens^{g} | phr | - | - | - | - | - | - | 9,7 | 9,7 | 9,7 | 9,7 | 9,7 | 9,7 |
| ZnO | phr | 2,5 | 2,5 | 2,5 | 2,5 | 2,5 | 2,5 | 2,5 | 2,5 | 2,5 | 2,5 | 2,5 | 2,5 |
| Alterungsschutz mittel /Ozonschutzmitt el/Stearinsäure | phr | 6,5 | 6,5 | 6,5 | 6,5 | 6,5 | 6,5 | 6,5 | 6,5 | 6,5 | 6,5 | 6,5 | 6,5 |
| DPG | phr | 2 | 2 | 2 | 2 | 2 | 2 | 2 | 2 | 2 | 2 | 2 | 2 |
| CBS | phr | 2 | 2 | 2 | 2 | 2 | 2 | 2 | 2 | 2 | 2 | 2 | 2 |
| Schwefel | phr | 2 | 2 | 2 | 2 | 2 | 2 | 2 | 2 | 2 | 2 | 2 | 2 |

| **Eigenschaften** | | | | | | | | | | | | | |
|---|---|---|---|---|---|---|---|---|---|---|---|---|---|
| Shorehärte RT | ShA | 71,2 | 67,7 | 70,5 | 65,9 | 70,4 | 66,3 | 67,5 | 63,5 | 67,2 | 63,7 | 67,6 | 64,1 |
| Shorehärte 70°C | ShA | 66,8 | 62,8 | 66,1 | 63,7 | 66,2 | 63,2 | 65,2 | 59,9 | 62,6 | 61,6 | 64,9 | 62,1 |
| Rü-Pra. RT | % | 17,9 | 15,1 | 18,6 | 26,1 | 16,4 | 18,2 | 21,6 | 18,0 | 19,6 | 27,9 | 17,6 | 19,2 |
| Rü-Pra. 70°C | % | 52,4 | 47,5 | 46,1 | 57,3 | 47,4 | 52,2 | 55,1 | 48,8 | 49,4 | 60,9 | 53,2 | 58,4 |
| tan δ 0°C | - | 0, 607 | 0, 684 | 0, 527 | 0, 529 | 0, 644 | 0, 691 | 0, 723 | 0, 852 | 0, 552 | 0, 535 | 0, 745 | 0, 791 |
| tan δ 70°C | - | 0, 113 | 0, 139 | 0, 134 | 0, 089 | 0, 139 | 0, 112 | 0, 100 | 0, 129 | 0, 126 | 0, 062 | 0, 115 | 0, 102 |
| Abrieb | mm³ | 131 | 142 | 115 | 121 | 142 | 145 | 111 | 121 | 91 | 99 | 118 | 120 |

| | | | | | | | | | | | | | |
|---|---|---|---|---|---|---|---|---|---|---|---|---|---|
| ^{b} SBR, Sprintan® SLR-4602, Fa. Trinseo, Vinylanteil: 63 Gew.-%, Styrolanteil: 21 Gew.-%, funktionalisiert ^{c} Flüssig SBR, Ricon® 100, Fa. Cray Valley ^{d} TDAE-Öl ^{h} Ultrasil® VN3, Fa. Evonik (BET 180 m²/g) ^{f} TESPD Si261, Fa. Evonik; ^{g} 3-Octanoylthio-1-propyltriethoxysilan, NXT, Fa Momentive | | | | | | | | | | | | | |

Die Ergebnisse, die in Tabelle 5 aufgelistet sind, zeigen, dass sich die Nassgriffeigenschaften bei Austausch von einem TESPD als Silankupplungsagens gegen ein geblocktes und/oder ungeblocktes Mercaptosilan in Kombination mit den speziellen Kautschukblends auf gleichem Niveau verbleiben. Als Indikator gilt hier die nahezu gleichbleibende Rückprallelastizität bei Raumtemperatur. Der Rollwiderstand (Indikatoren Rückprallelastizität bis 70 °C bzw. der Verlustfaktor tan δ bei 70 °C) wird dabei positiv beeinflusst. Der Konflikt der sich üblicherweise gegensätzlich verhaltenden Reifeneigenschaften wird damit entschärft. Dies geschieht bei gleichbleibendem oder sogar leicht verbessertem Abriebverhalten. Die Daten der Tabelle 5 spiegeln die auch in Tabelle 4 gezeigten Vorteile wider.

## Patentansprüche

1. Schwefelvernetzbare Kautschukmischung, enthaltend
- einen Kautschukblend aus
- zumindest einem hochmolekularen, lösungspolymerisierten Dienpolymer A aus zumindest einem konjugierten Dien und gegebenenfalls einer oder mehrerer vinylaromatischer Verbindungen mit einem Gehalt an vinylaromatischer Verbindung von 0 bis 50 Gew.-%, einem Vinylanteil von 8 bis 80 Gew.-% bezogen auf den Dienanteil, einer Glasübergangstemperatur T_{g} gemäß DSC von - 100 °C < T_{g} < +20 °C, einem Molekulargewicht M_{w} gemäß GPC von mehr als 350000 g/mol und mit einer Polydispersität PD von 1,1 < PD < 3 und
- zumindest einem niedermolekularen, lösungspolymerisierten Polymer B aus zumindest einem konjugierten Dien
oder zumindest einem konjugierten Dien und einer oder mehrerer vinylaromatischen Verbindungen
oder zumindest einer oder mehrerer vinylaromatischen Verbindungen mit einem Gehalt an vinylaromatischer Verbindung von 0 bis 50 Gew.-%, einem Vinylanteil von 8 bis 80 Gew.-% bezogen auf den ggf. vorhandenen Dienanteil, einer Glasübergangstemperatur T_{g} gemäß DSC von -100 °C < T_{g} < +80 °C, einem Molekulargewicht M_{w}gemäß GPC von 1300 g/mol < M_{w} < 10000 g/mol und mit einer Polydispersität PD von 1 < PD < 1,5,
wobei zumindest eines der Polymere A oder B am Kettenende und/oder entlang der Polymerkette und/oder in einem Kopplungszentrum (an einem Funktionalisierungszentrum können mehrere Polymere sitzen) mit zumindest einer Gruppe ausgewählt aus Epoxygruppen, Hydroxygruppen, Carboxygruppen, Silan-Sulfidgruppen, Aminogruppen, Siloxangruppen, Organosiliciumgruppen, Phthalocyaningruppen und Aminogruppen enthaltenden Alkoxysilylgruppen funktionalisiert ist,
und wobei der Kautschukblend erhalten ist durch Vereinigen der Polymerlösungen der Polymere A und B und anschließendes Strippen und Trocknen,
- 30 bis 300 phr zumindest einer Kieselsäure und
- 1 bis 20 phf zumindest eines geblockten und/oder ungeblockten Mercaptosilans als Silankupplungsagens.

2. Kautschukmischung nach Anspruch 1, **dadurch gekennzeichnet, dass** zumindest das niedermolekulare, lösungspolymerisierte Polymer B funktionalisiert ist.

3. Kautschukmischung nach Anspruch 2, **dadurch gekennzeichnet, dass** auch das hochmolekulare, lösungspolymerisierte Dienpolymer A funktionalisiert ist.

4. Kautschukmischung nach zumindest einem der vorhergehenden Ansprüche, **dadurch gekennzeichnet, dass** zumindest eines der Polymere A oder B am Kettenende mit einer Aminogruppen-enthaltenden Alkoxysilylgruppe und wenigstens einer weiteren Aminogruppe und/oder wenigstens einer weiteren Alkoxysilylgruppe und/oder wenigstens einer weiteren Aminogruppen-enthaltenden Alkoxysilylgruppe funktionalisiert ist, wobei die Aminogruppen mit oder ohne Spacer an das Kettenende der Polymerkette gebunden sind.

5. Kautschukmischung nach zumindest einem der vorhergehenden Ansprüche, **dadurch gekennzeichnet, dass** zumindest eines der Polymere A oder B am Kettenende und/oder entlang der Polymerkette und/oder in einem Kopplungszentrum mit einer Silan-Sulfidgruppe funktionalisiert ist.

6. Kautschukmischung nach zumindest einem der vorhergehenden Ansprüche, **dadurch gekennzeichnet, dass** zumindest eines der Polymere A oder B am Kettenende und/oder entlang der Polymerkette und/oder in einem Kopplungszentrum mit einer Siloxangruppe funktionalisiert ist.

7. Kautschukmischung nach zumindest einem der vorhergehenden Ansprüche, **dadurch gekennzeichnet, dass** zumindest eines der Polymere A oder B Kopplungszentren aufweist.

8. Kautschukmischung nach zumindest einem der vorhergehenden Ansprüche, **dadurch gekennzeichnet, dass** der Kautschukblend 5 bis 100 phr (bezogen auf das zumindest eine hochmolekulare, lösungspolymerisierte Dienpolymer A) des zumindest einen niedermolekularen, lösungspolymerisierten Polymers B aufweist.

9. Kautschukmischung nach zumindest einem der vorhergehenden Ansprüche, **dadurch gekennzeichnet, dass** der Kautschukblend eine Mooney-Viskosität (ML1+4, 100 °C gemäß ASTM-D 1646) von 40 bis 100 Mooney-Einheiten aufweist.

10. Kautschukmischung nach zumindest einem der vorhergehenden Ansprüche, **dadurch gekennzeichnet, dass** der Anteil des Dienpolymers A des Kautschukblends in der Kautschukmischung wenigstens 50 phr bezogen auf die Gesamtmenge der in der Kautschukmischung vorhandenen Festkautschuke beträgt.

11. Kautschukmischung nach zumindest einem der vorhergehenden Ansprüche, **dadurch gekennzeichnet, dass** sie 0,1 bis 20 phr Ruß enthält.

12. Fahrzeugreifen, insbesondere Fahrezugluftreifen, bei dem zumindest ein Bauteil die mit schwefelvernetzte Kautschukmischung nach einem der Ansprüche 1 bis 11 aufweist.

13. Fahrzeugreifen nach Anspruch 12, **dadurch gekennzeichnet, dass** zumindest dessen mit der Fahrbahn in Berührung kommender Teil des Laufstreifens die mit schwefelvernetzte Kautschukmischung nach einem der Ansprüche 1 bis 11 aufweist.

## Claims

1. A sulfur-crosslinkable rubber mixture comprising
- a rubber blend composed of
- at least one solution-polymerized diene polymer A of high molecular weight, formed from at least one conjugated diene and optionally one or more vinylaromatic compounds, having a content of vinylaromatic compound of 0% to 50% by weight, having a vinyl content of 8% to 80% by weight based on any diene content present, having a glass transition temperature T_{g} according to DSC of -100°C < T_{g} < +20°C, having a molecular weight M_{w} according to GPC of more than 350 000 g/mol and having a polydispersity PD of 1.1 < PD < 3 and
- at least one solution-polymerized polymer B of low molecular weight, formed from at least one conjugated diene,
or at least one conjugated diene and one or more vinylaromatic compounds
or at least one or more than one vinylaromatic compound
having a content of vinylaromatic compound of 0% to 50% by weight, having a vinyl content of 8% to 80% by weight based on any diene content present, having a glass transition temperature T_{g} according to DSC of
- 100°C < T_{g} < +80°C, having a molecular weight M_{w} according to GPC of 1300 g/mol < M_{w} < 10 000 g/mol and having a polydispersity PD of 1 < PD < 1.5, wherein at least one of polymers A and B has been functionalized at the chain end and/or along the polymer chain and/or at a coupling site (multiple polymers may be attached to one functionalization site) with at least one group selected from epoxy groups, hydroxyl groups, carboxyl groups, silane sulfide groups, amino groups, siloxane groups, organosilicon groups, phthalocyanine groups and amino group-containing alkoxysilyl groups,
and wherein the rubber blend has been obtained by combining polymer solutions A and B, followed by stripping and drying,
- 30 to 300 phr of at least one silica and
- 1 to 20 phf of at least one blocked and/or unblocked mercaptosilane as silane coupling agent.

2. The rubber mixture as claimed in claim 1, **characterized in that** at least the solution-polymerized polymer B of low molecular weight has been functionalized.

3. The rubber mixture as claimed in claim 2, **characterized in that** the solution-polymerized diene polymer A of high molecular weight has been functionalized as well.

4. The rubber mixture as claimed in at least one of the preceding claims, **characterized in that** at least one of polymers A and B has been functionalized at the chain end with an amino group-containing alkoxysilyl group and at least one further amino group and/or at least one further alkoxysilyl group and/or at least one further amino group-containing alkoxysilyl group, where the amino groups are bonded to the chain end of the polymer chain with or without spacers.

5. The rubber mixture as claimed in at least one of the preceding claims, **characterized in that** at least one of the polymers A and B has been functionalized at the chain and and/or along the polymer chain and/or at a coupling site with a silane sulfide group.

6. The rubber mixture as claimed in at least one of the preceding claims, **characterized in that** at least one of the polymers A and B has been functionalized at the chain end and/or along the polymer chain and/or at a coupling site with a siloxane group.

7. The rubber mixture as claimed in at least one of the preceding claims, **characterized in that** at least one of the polymers A and B has coupling sites.

8. The rubber mixture as claimed in at least one of the preceding claims, **characterized in that** the rubber blend includes 5 to 100 phr (based on the at least one solution-polymerized diene polymer A of high molecular weight) of the at least one solution-polymerized polymer B of low molecular weight.

9. The rubber mixture as claimed in at least one of the preceding claims, **characterized in that** the rubber blend has a Mooney viscosity (ML1+4, 100°C according to ASTM-D 1646) of 40 to 100 Mooney units.

10. The rubber mixture as claimed in at least one of the preceding claims, **characterized in that** the proportion of the diene polymer A of the rubber blend in the rubber mixture is at least 50 phr based on the total amount of the solid rubbers present in the rubber mixture.

11. The rubber mixture as claimed in at least one of the preceding claims, **characterized in that** it contains 0.1 to 20 phr of carbon black.

12. A vehicle tire, especially pneumatic vehicle tire, in which at least one component includes the sulfur-crosslinked rubber mixture as claimed in any of claims 1 to 11.

13. The vehicle tire as claimed in claim 12, **characterized in that** at least the part of the tread that comes into contact with the driving surface includes the sulfur-crosslinked rubber mixture as claimed in any of claims 1 to 11.

## Revendications

1. Mélange pour caoutchouc réticulable par le soufre, contenant
- un mélange de caoutchoucs constitué par
- au moins un polymère diénique A de haut poids moléculaire, polymérisé en solution, d'au moins un diène conjugué et le cas échéant d'un ou de plusieurs composés aromatiques de vinyle présentant une teneur en composé aromatique de vinyle de 0 à 50% en poids, une proportion de vinyle de 8 à 80% en poids par rapport à la proportion diénique, une température de transition vitreuse T_{g} selon DSC (calorimétrie différentielle à balayage) de -100°C < T_{g} < +20°C, un poids moléculaire M_{w} selon CPG supérieur à 350.000 g/mole et présentant une polydispersité PD de 1,1 < PD < 3 et
- au moins un polymère B de bas poids moléculaire, polymérisé en solution d'au moins un diène conjugué ou
d'au moins un diène conjugué et d'un ou de plusieurs composés aromatiques de vinyle ou d'au moins un ou de plusieurs composés aromatiques de vinyle présentant une teneur en composé aromatique de vinyle de 0 à 50% en poids, une proportion de vinyle de 8 à 80% en poids par rapport à la proportion diénique le cas échéant présente, une température de transition vitreuse T_{g} selon DSC de -100°C < T_{g} < +80°C, un poids moléculaire M_{w} selon CPG de 1300 g/mole < M_{w} < 10.000 g/mole et présentant une polydispersité PD de 1 < PD < 1,5,
au moins l'un des polymères A ou B étant fonctionnalisé au niveau de l'extrémité de la chaîne et/ou le long de la chaîne polymère et/ou dans un centre de couplage (plusieurs polymères peuvent se trouver au niveau d'un centre de fonctionnalisation) par au moins un groupe choisi parmi les groupes époxy, les groupes hydroxy, les groupes carboxy, les groupes silane-sulfure, les groupes amino, les groupes siloxane, les groupes organosiliciés, les groupes phtalocyanine et les groupes alcoxysilyle contenant des groupes amino et le mélange de caoutchoucs étant obtenu par réunion des solutions polymères des polymères A et B et extraction et séchage consécutifs,
- 30 à 300 phr (parties par cent parties de caoutchouc) d'au moins une silice et
- 1 à 20 pcc (parties par cent parties de charge) d'un mercaptosilane bloqué et/ou non bloqué en tant qu'agent de couplage au silane.

2. Mélange pour caoutchouc selon la revendication 1, **caractérisé en ce qu'**au moins le polymère B de bas poids moléculaire, polymérisé en solution, est fonctionnalisé.

3. Mélange pour caoutchouc selon la revendication 2, **caractérisé en ce que** le polymère diénique A de haut poids moléculaire, polymérisé en solution est également fonctionnalisé.

4. Mélange pour caoutchouc selon au moins l'une quelconque des revendications précédentes, **caractérisé en ce qu'**au moins l'un des polymères A ou B est fonctionnalisé au niveau de l'extrémité de la chaîne par un groupe alcoxysilyle contenant des groupes amino et par au moins un autre groupe amino et/ou par au moins un autre groupe alcoxysilyle et/ou par au moins un autre groupe alcoxysilyle contenant des groupes amino, les groupes amino étant liés à l'extrémité de chaîne de la chaîne polymère avec ou sans espaceur.

5. Mélange pour caoutchouc selon au moins l'une quelconque des revendications précédentes, **caractérisé en ce qu'**au moins l'un des polymères A ou B est fonctionnalisé au niveau de l'extrémité de la chaîne et/ou le long de la chaîne polymère et/ou dans un centre de couplage par un groupe silane-sulfure.

6. Mélange pour caoutchouc selon au moins l'une quelconque des revendications précédentes, **caractérisé en ce qu'**au moins l'un des polymères A ou B est fonctionnalisé au niveau de l'extrémité de la chaîne et/ou le long de la chaîne polymère et/ou dans un centre de couplage par un groupe siloxane.

7. Mélange pour caoutchouc selon au moins l'une quelconque des revendications précédentes, **caractérisé en ce qu'**au moins l'un des polymères A ou B présente des centres de couplage.

8. Mélange pour caoutchouc selon au moins l'une quelconque des revendications précédentes, **caractérisé en ce que** le mélange de caoutchoucs présente 5 à 100 phr (par rapport audit au moins un polymère diénique A de haut poids moléculaire, polymérisé en solution) dudit au moins un polymère B de bas poids moléculaire, polymérisé en solution.

9. Mélange pour caoutchouc selon au moins l'une quelconque des revendications précédentes, **caractérisé en ce que** le mélange de caoutchoucs présente une viscosité de Mooney (ML 1+4, 100°C selon la norme ASTM-D 1646) de 40 à 100 unités de Mooney.

10. Mélange pour caoutchouc selon au moins l'une quelconque des revendications précédentes, **caractérisé en ce que** la proportion du polymère diénique A du mélange de caoutchoucs dans le mélange pour caoutchouc représente au moins 50 phr par rapport à la quantité totale des caoutchoucs solides présents dans le mélange pour caoutchouc.

11. Mélange pour caoutchouc selon au moins l'une quelconque des revendications précédentes, **caractérisé en ce qu'**il contient 0,1 à 20 phr de suie.

12. Pneumatique de véhicule, en particulier pneumatique à air de véhicule, dans lequel au moins une pièce présente le mélange pour caoutchouc réticulé au soufre selon l'une quelconque des revendications 1 à 11.

13. Pneumatique pour véhicule selon la revendication 12, **caractérisé en ce qu'**au moins sa partie de la bande de roulement entrant en contact avec la voie de roulement présente le mélange pour caoutchouc réticulé au soufre selon l'une quelconque des revendications 1 à 11.
